# EUROPEAN PATENT APPLICATION

(11) **EP 4 800 383 A1**
(43) Date of publication of application: **02.09.2026**
(21) Application number: 26155383.8
(22) Date of filing: 30.01.2026
(51) Int. Cl.: G01N 25/18, H01M 10/48

(54) **APPARATUS, METHOD, AND SYSTEM FOR MEASURING THERMAL CONDUCTIVITY OF SECONDARY BATTERY USING DETACHABLE JIG**

(30) Priority: 26.02.2025 KR 20250025347
(71) Applicant: SAMSUNG SDI CO., LTD., Yongin-si, Gyeonggi-do 17084 (KR)
(72) Inventor: Park, Jinsu, 17084 Yongin-si, Gyeonggi-do (KR); Kim, Minhyuk, 17084 Yongin-si, Gyeonggi-do (KR); Lee, Seunghyun, 17084 Yongin-si, Gyeonggi-do (KR)
(74) Representative: Meissner Bolte Partnerschaft mbB

(57) **Abstract**

Disclosed is an apparatus (200) for measuring thermal conductivity of a secondary battery (10) using a detachable jig. The thermal conductivity measurement apparatus (200) includes: a plurality of independent thermal conduction blocks (210) arranged to correspond to respective surfaces of the secondary battery (10); a heat source (220) attached to at least one of the thermal conduction blocks (210); and an insulation unit (230) configured to enclose peripheries of the thermal conduction blocks (210). The thermal conduction blocks (210) are configured to independently measure thermal conductivities of the respective surfaces of the secondary battery (10).

## Description

### CROSS-REFERENCE TO RELATED APPLICATION

The present application claims priority to and the benefit of Korean Patent Application No. 10-2025-0025347., filed on February 26, 2025, in the Korean Intellectual Property Office, the entire invention of which is incorporated herein by reference.

### BACKGROUND

### 1. Technical Field

The present invention relates to an apparatus, a method, and a system for measuring thermal conductivity of a secondary battery, in particular to evaluate a thermal runaway phenomenon of a secondary battery. More particularly the present invention relates to a technology that enables quantitative analysis of thermal characteristics of the secondary battery under a thermal runaway condition and facilitates efficient and stable thermal design based on the analysis result, by providing a structure including a detachable thermal conduction block configured to independently measure thermal conductivity of each surface of the secondary battery, a thermal measurement unit configured to collect thermal data, a heat source configured to induce heat, and an insulation unit configured to prevent heat loss.

### 2. Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly consisting of a positive electrode and a negative electrode, a case that accommodates the electrode assembly, a terminal part connected to the electrode assembly, etc.

Secondary batteries are rechargeable batteries, and may be applied to various industries, including, in the case of low capacity, devices such as smartphones, laptops, and other digital devices, and, in the case of high capacity, electric vehicles and energy storage systems (ESSs). In particular, controlling heat generated during charging and discharging is considered a very important technical challenge in order to ensure performance and stability of the secondary batteries. Because the secondary batteries may experience a rapid increase in internal temperature due to a thermal runaway phenomenon, which may lead to safety issues such as fire or explosion, thermal management technology for preventing and managing such events is essential.

Conventional thermal runaway evaluation technologies have employed external heat sources to analyze thermal characteristics of secondary batteries, or have measured only specific temperature changes using an integrated jig as a whole. Such conventional methods do not allow independent measurement of the thermal conductivity characteristics of each surface of a secondary battery, making it difficult to quantitatively evaluate thermal conductivity based on the measured data. In addition, the conventional methods have limitations in effectively preventing thermal interference and heat loss caused by external environments, thereby failing to provide reliable data required for optimizing battery design and thermal management.

The above information disclosed in this Background section is for enhancement of understanding of the background of the present invention, and therefore, it may contain information that does not constitute related (or prior) art.

### SUMMARY

The present invention is directed to provide an apparatus, a method, and a system for measuring thermal conductivity of a secondary batter, in particular to evaluate a thermal runaway phenomenon of a secondary battery, and more particularly, to provide a technology that enables quantitative analysis of thermal characteristics of the secondary battery under a thermal runaway condition and facilitates efficient and stable thermal design based on the analysis result, by providing a structure including detachable thermal conduction blocks configured to independently measure thermal conductivity of each surface of the secondary battery, a thermal measurement unit configured to collect thermal data, a heat source configured to induce heat, and an insulation unit configured to prevent heat loss.

However, the technical problem to be solved by the present invention is not limited to the above problem, and other problems not mentioned herein, and aspects and features of the present invention that would address such problems, will be clearly understood by those skilled in the art from the description of the present invention below.

An apparatus for measuring thermal conductivity of a secondary battery using a detachable jig according to the present invention includes a plurality of independent thermal conduction blocks arranged to correspond to respective surfaces of the secondary battery, a heat source attached to at least one of the thermal conduction blocks, and an insulation unit configured to enclose peripheries of the thermal conduction blocks. The thermal conduction blocks may be configured to independently measure thermal conductivities of the respective surfaces of the secondary battery.

In embodiments, the heat source may include a heater attached to a specific surface of the thermal conduction blocks to induce thermal runaway of the secondary battery.

In embodiments, the apparatus may include a thermal measurement unit located outside the thermal conduction blocks and configured to collect thermal data. The thermal measurement unit may include a thermocouple. The thermocouple may be disposed at a position that is not in contact with the thermal conduction blocks.

In embodiments, the insulation unit may include a thermal conduction blocking structure inside the thermal conduction blocks, and may be configured to guide heat to be transferred in only a specific direction.

In embodiments, the apparatus may further include a controller configured to calculate thermal conductivity of each of the thermal conduction blocks using a difference between a maximum temperature and an initial temperature of the corresponding thermal conduction block.

In embodiments, each of the thermal conduction blocks may be designed in a hexahedral shape, and may be fabricated such that a contact surface of each of the thermal conduction blocks corresponds to a surface area of a corresponding surface of the secondary battery.

In embodiments, the apparatus may be configured to simultaneously measure thermal conductivities of respective surfaces of a plurality of secondary batteries.

A method of measuring thermal conductivity of a secondary battery using a detachable jig to measure thermal conductivities of respective surfaces of the secondary battery according to the present invention includes: placing the secondary battery in a thermal conductivity measurement apparatus; inducing thermal runaway by attaching a heat source to a specific surface of the secondary battery; and comparing temperatures before and after the thermal runaway by using a thermal measurement unit on another surface of the secondary battery.

In embodiments, the inducing of the thermal runaway may include inducing the thermal runaway through the heat source including a heater attached to a long side of the secondary battery.

In embodiments, the comparing of the temperatures before and after the thermal runaway may include comparing the temperatures through the thermal measurement unit including a thermocouple disposed at a position that is not in contact with thermal conduction blocks outside the secondary battery.

In embodiments, the comparing of the temperatures before and after the thermal runaway may include calculating the thermal conductivity of each of the surfaces of the secondary battery using a formula Q = cmΔT with a difference of the measured temperatures.

In embodiments, the method may further include enclosing thermal conduction blocks with an insulator so that flame and particles discharged from a vent of the secondary battery are prevented from affecting temperature measurement.

In embodiments, the method may further include independently performing thermal conductivity measurement for each of a plurality of secondary batteries.

In embodiments, the method may further include securing the secondary battery by using a screw fastener included in thermal conduction blocks.

A system for measuring thermal conductivity of a secondary battery using a detachable jig to evaluate the thermal conductivity of the secondary battery under a thermal runaway condition according to the present invention includes a plurality of independent thermal conduction blocks arranged to correspond to respective surfaces of the secondary battery, a heat source provided on at least one of the thermal conduction blocks and configured to induce thermal runaway, a thermal measurement unit located outside the thermal conduction blocks and configured to collect thermal data, and a controller configured to calculate thermal conductivity of each of the surfaces of the secondary battery based on the thermal data. The system may be configured to quantitatively evaluate the independent thermal conductivity for each of the surfaces of the secondary battery.

In embodiments, the thermal measurement unit may be located at a position that is not in contact with the thermal conduction blocks and configured to prevent interference from flame and particles discharged from a vent of the secondary battery.

In embodiments, the controller may calculate the thermal conductivity using a formula Q = cmΔT based on a maximum temperature and an initial temperature of each of the thermal conduction blocks.

In embodiments, the heat source may include a heater attached to a specific surface of the secondary battery. The heater may generate heat to a temperature set by the controller to induce the thermal runaway.

In embodiments, the system may include a thermal measurement unit corresponding to the plurality of independent thermal conduction blocks so that a plurality of secondary batteries are simultaneously evaluated.

In embodiments, the thermal conduction blocks may include an independent insulation unit for each of the surfaces of the secondary battery. The insulation unit may be designed to guide heat in a specific direction.

According to embodiments of the present invention, a thermal conductivity measurement apparatus, method, and system capable of independently measuring the thermal conductivity of each surface of a secondary battery under a thermal runaway condition are provided, thereby enabling quantitative analysis of the thermal characteristics of the secondary battery. Particularly, detachable thermal conduction blocks may be designed to allow independent calculation of thermal conductivity for each surface of the secondary battery, making it possible to evaluate thermal characteristics for each surface, which has been difficult in existing technologies. Accordingly, a thermal management and cooling system can be optimized at a design stage of the secondary battery, and safety issues caused by thermal runaway may be prevented in advance.

Furthermore, the present invention may minimize external thermal interference and heat loss through non-contact arrangement of a thermal measurement unit (e.g., a thermocouple) and an insulation unit, thereby enabling more accurate measurement of thermal data. The measured data may provide reliable results through a thermal conductivity calculation formula (Q = cmΔT). Based on the results, the safety of the secondary battery under various environmental conditions may be estimated. As a result, the present invention may not only improve the quality and stability of secondary batteries but may also significantly enhance the reliability of secondary batteries in applications such as energy storage systems and electric vehicles.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate preferred embodiments of the present invention, and help to further understand the technical spirit of the present invention along with the aforementioned contents of the invention. Accordingly, the present invention should not be construed as being limited to only contents described in such drawings:
FIG. 1A is a top perspective view of a prismatic secondary battery;
FIG. 1B is a cross-sectional view taken along line I-I' of FIG. 1A;
FIG. 2 is a block diagram illustrating an apparatus for measuring thermal conductivity of a secondary battery using a detachable jig;
FIG. 3 is a perspective view illustrating configuration and arrangement of the secondary battery, thermal conduction blocks, a heat source, and an insulation unit;
FIG. 4 is an exploded perspective view illustrating the configuration and arrangement of the secondary battery, the thermal conduction blocks, the heat source, and the insulation unit;
FIG. 5 is a diagram illustrating thermal runaway induction and a thermal conduction flow direction of the secondary battery;
FIG. 6 is a diagram illustrating a screw fastening method and an assembly structure for securing the insulation unit and the thermal conduction blocks; and
FIG. 7 is a flowchart illustrating a method for measuring thermal conductivity of a secondary battery using a detachable jig.

### Detailed description

Exemplary embodiments of the present invention will be described below in detail with reference to the accompanying drawings. Prior to the description, it is noted that the terms or words used in this specification and claims should not be construed as being limited to common or dictionary meanings but instead should be understood to have meanings and concepts in agreement with the spirit of the present invention based on the principle that an inventor can define the concept of each term suitably in order to describe his/her own invention in the best way possible. Accordingly, since the embodiments described in this specification and the configurations illustrated in the drawings are only an example of the present invention and they do not cover all the technical ideas of the present invention, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present invention, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present invention relates to "one or more embodiments of the present invention". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present invention and is not intended to limit the present invention.

The present invention will be described in detail with reference to the attached drawings.

Examples of secondary batteries include a coin type, a cylindrical type, a prismatic type, and a pouch type. The present invention is basically applicable to a prismatic secondary battery. Therefore, the prismatic secondary battery will first be briefly described prior to description of embodiments of the present invention.

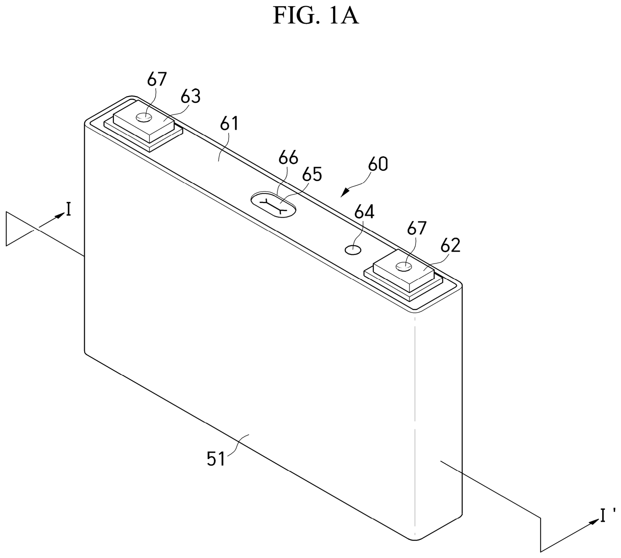

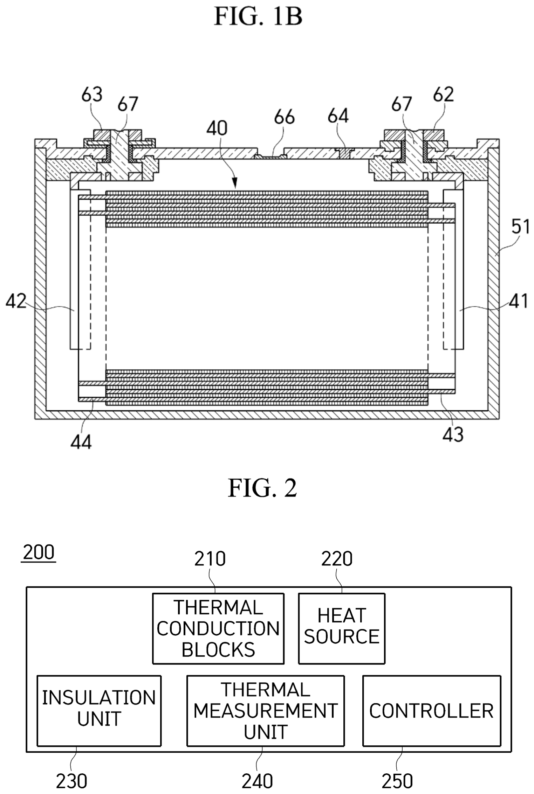

FIG. 1A is a top perspective view of the prismatic secondary battery. FIG. 1B is a cross-sectional view taken along line I-I' of FIG. 1A.

First, the external appearance of the prismatic secondary battery illustrated in FIG. 1A will be described.

A casing 51 defines an overall appearance of the prismatic secondary battery, and may be made of conductive metal, such as aluminum, aluminum alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 63 and a second terminal 62 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is for degassing the secondary battery, i.e., for discharging gas generated inside the secondary battery.

With reference to FIG. 1B, the internal structure of the prismatic secondary battery and the coupling structure with the cap assembly 60 will be described.

As illustrated in FIG. 1B, the prismatic secondary battery may basically include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 is not limited in the present invention. In addition, the electrode assembly 40 may be a Z-stack electrode assembly in which a first electrode plate and a second electrode plate are inserted into both sides of a separator bent into a Z-stack. Furthermore, the electrode assembly 40 may consist of one or more electrode assemblies, which are stacked such that their long sides are adjacent to each other and accommodated in the casing, and the number of electrode assemblies is not limited in the present invention. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminum or aluminum alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40. Alternatively, the first electrode tab 43 and the second electrode tab 44 may be located on one end side of the electrode assembly 40 in the same direction. Here, the left and the right are represented based on the secondary battery illustrated in FIG. 1 for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1A, through terminal pins 67, respectively. In some embodiments, the terminal pins 67 may each have an outer peripheral surface that is threaded, and may be fastened to the first terminal 62 and the second terminal 63 by screwing. However, the present invention is not limited thereto. For example, the terminal pins 67 may also be coupled to the first terminal 62 and the second terminal 63 by riveting or welding.

FIG. 2 is a block diagram illustrating an apparatus 200 for measuring thermal conductivity of a secondary battery using a detachable jig.

FIG. 2 illustrates main components of the thermal conductivity measurement apparatus 200 and describes core system elements for implementing technical configuration of the present invention and interactions therebetween. The thermal conductivity measurement apparatus 200 may be designed to analyze thermal runaway characteristics of a secondary battery and to quantitatively measure thermal conductivity of each surface of the secondary battery. The apparatus 200 may include thermal conduction blocks 210, a heat source 220, and an insulation unit 230, thus enabling advanced thermal management evaluation through the cooperative operation of the components.

The thermal conduction blocks 210 may be independent copper blocks arranged to correspond to respective surfaces of the secondary battery, and may effectively receive heat from the secondary battery due to relatively high thermal conductivity and store the heat. Each copper block may be formed in a hexahedral shape and designed to precisely correspond to the surface area of the corresponding surface of the secondary battery. Each block may have a structure capable of independently measuring thermal conductivity. The foregoing configuration enables separate measurement of thermal conductivity characteristics for each surface, allowing for more precise data collection compared to existing technologies. The thermal conduction block 210 is assembled together with the insulation unit 230 and a thermal measurement unit 240, which will be described later, so as to minimize thermal interference with the external environment.

The heat source 220 may be a device designed to induce thermal runaway on a specific surface, and may include a heater. The heater may be attached to a surface of one of the thermal conduction blocks 210, and may generate heat to a temperature set through a controller 250, which will be described later. Thereby, a thermal runaway phenomenon may be induced, and the generated heat may be transferred to other surfaces of the secondary battery. The heater may be attached to a long side (i.e., major surface) of the secondary battery, and the heat generated by the heat source 220 may be distributed and measured through the thermal conduction blocks 210.

The insulation unit 230 may have a structure that encloses the thermal conduction blocks 210, and may prevent thermal interference with the external environment and guide heat to be transferred in only a specific direction in the block. The insulation unit 230 may be made of a high-performance insulating material, and may minimize heat loss on each surface, thereby ensuring the accuracy of thermal measurement. The insulation unit 230 may include a lower insulator and side insulators to form a structure that completely encloses the copper blocks, and may be formed of a material that does not deform even under high-temperature conditions.

The thermal measurement unit 240 may be disposed outside the thermal conduction blocks 210 and configured to collect temperature data. The thermocouple used in the thermal measurement unit 240 may be located at a position that does not make into direct contact with the thermal conduction blocks 210, and may be designed to measure an internal temperature of each block without external interference. The aforementioned non-contact design may reduce measurement errors caused by external factors and enhance reliability. The thermocouple may be disposed for each surface of the secondary battery to independently collect temperature data. Accordingly, thermal conductivities for all surfaces of the secondary battery can be precisely calculated.

The controller 250 may calculate thermal conductivity based on data collected from the thermal conduction blocks 210 and the thermal measurement unit 240. The controller 250 may quantify the thermal conductivity of each surface using the formula Q = cmΔT with a difference between a maximum temperature and an initial temperature of each surface. In the formula, Q represents the thermal conductivity, c represents the specific heat of the thermal conduction block, m represents the mass of the block, and ΔT represents the temperature change. The foregoing calculation enables accurate analysis of thermal characteristics, and may be utilized to improve secondary battery design and evaluate safety.

As embodiments, the case in which thermal conductivity characteristics of the secondary battery are measured under thermal runaway conditions using the thermal conductivity measurement apparatus 200 may be provided. A heater may be attached to a long side of a specific secondary battery to induce thermal runaway, and temperature data may be collected by the thermocouples arranged on respective surfaces of the copper blocks. The collected data may be analyzed by the controller 250, and as a result, the thermal conductivity of each surface may be calculated. For example, if the thermal conductivity on a specific surface is determined to be significantly higher than that on other surfaces, additional insulation design may be applied to the corresponding surface, or a cooling system for the corresponding surface may be improved. Such analysis enables optimization of thermal management system design for the secondary battery.

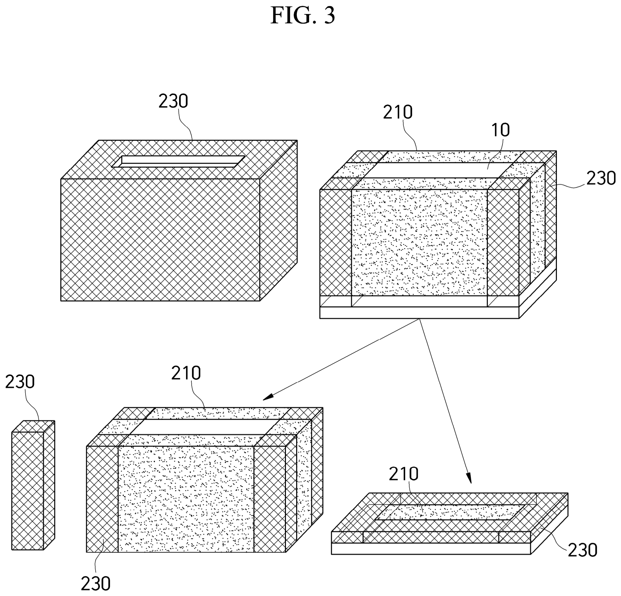

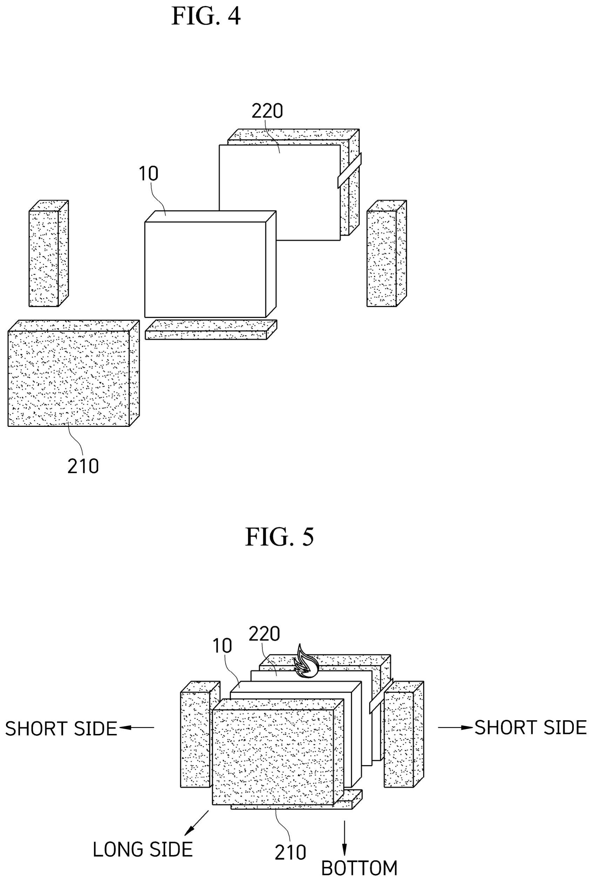

FIG. 3 is a perspective view illustrating configuration and arrangement of a secondary battery 10, the thermal conduction blocks 210, the heat source 220, and the insulation unit 230. FIG. 4 is an exploded perspective view illustrating the configuration and arrangement of the secondary battery 10, the thermal conduction blocks 210, the heat source 220, and the insulation unit 230.

FIG. 3 is a diagram visually illustrating specific arrangement and operation of the secondary battery 10 and key components of the present invention, including the thermal conduction blocks 210, the heat source 220, and the insulation unit 230, and FIG. 4 is an exploded view thereof. These drawings focus on illustrating the configuration of the thermal conductivity measurement apparatus of the present invention and a method of operating the apparatus to evaluate the secondary battery under thermal runaway conditions.

The secondary battery 10 may be located in close contact with the thermal conduction blocks 210. The secondary battery may be a prismatic battery designed for use in electric vehicles, energy storage systems (ESS), and portable devices, and may be tested in an environment where thermal runaway conditions can be reproduced in order to analyze thermal characteristics. The heat source 220 may be attached to a long side (i.e., major surface) of the secondary battery. The heat source 220 may include a heater, thus functioning to induce thermal runaway. The heat source 220 may be set to a desired temperature under the controller, thereby enabling the secondary battery to enter a thermal runaway state.

The thermal conduction blocks 210 may be formed of independent copper blocks arranged to correspond to respective surfaces of the secondary battery. Each block may be made of copper having relatively high thermal conductivity, and may thus effectively receive and store heat. Particularly, each of the thermal conduction blocks 210 may be designed to have a structure capable of independently measuring heat from each surface, thereby enabling precise analysis of thermal conductivity for each surface. Heat generated due to thermal runaway may be distributed through the blocks and subsequently used for data collection and analysis.

The insulation unit 230 may have a structure that encloses the thermal conduction blocks 210, and may be designed to block external thermal interference and to guide heat to be transferred in a specific direction in the block. The insulation unit 230 may be made of a material that remains stable even at high temperatures, and may serve to maintain close contact between the thermal conduction blocks 210 and the secondary battery and minimize heat loss to the external environment. Particularly, when the secondary battery reaches a relatively high temperature due to thermal runaway, the insulation unit 230 may prevent heat leakage and ensure a reliable experimental environment.

Although not illustrated in FIGS. 3 and 4, the thermal measurement unit 240 may be located outside the copper blocks. The thermocouple used as the thermal measurement unit 240 may be positioned so as not to be in direct contact with the blocks, thereby enabling precise temperature measurement without external interference. The thermocouple may independently collect data for each surface of the secondary battery and provide an accurate temperature change necessary for calculating thermal conductivity.

As embodiments, the thermal conductivity measurement apparatus of the present invention may be applied to evaluate thermal characteristics of a specific secondary battery. The secondary battery may be placed in the thermal conduction blocks 210 formed of copper blocks, and may be heated to a specific temperature through the heat source 220. During the heating process, thermal runaway may be induced, and generated heat may be transferred to each surface of the secondary battery. The thermocouples located outside the copper blocks may collect temperature changes of the respective surfaces, and the controller 250 may calculate and analyze the thermal conductivities based on the collected data. For example, if a specific surface of the secondary battery has higher thermal conductivity than other surfaces, additional insulation design may be applied to the corresponding surface, or an additional cooling system may be designed.

The thermal conductivity measurement apparatus may also be designed in consideration of expandability. The thermal conductivity measurement apparatus may be designed to allow simultaneous testing of a plurality of secondary batteries, and may be applied to batteries of various sizes and shapes. In addition, to enhance safety in high-temperature environments, an additional protective layer may be disposed between the insulation unit 230 and the thermal conduction blocks 210.

FIG. 5 is a diagram illustrating thermal runaway induction and a thermal conduction flow direction of the secondary battery.

FIG. 5 is a diagram visually illustrating the flow of heat generated during a thermal runaway condition of the secondary battery and characteristics of heat transfer to each surface. This drawing illustrates a method by which the thermal conduction blocks 210, the heat source 220, and the insulation unit 230 are arranged and interact to induce and measure a thermal runaway phenomenon. In particular, the drawing focuses on explaining the transfer of heat to each surface of the secondary battery during the thermal runaway and the corresponding measurement process.

The secondary battery 10 may be placed in close contact with the thermal conduction blocks 210. The heat source 220 may be attached to a long side (i.e., major surface) of the secondary battery 10. The heat source 220 may include a heater, and may be heated to a specific temperature under the controller to induce thermal runaway. The heater of the heat source 220 may intensively heat the long side of the secondary battery 10, thereby generating a thermal runaway phenomenon. The heat may be transferred to the other surfaces of the second battery 10. The generated heat may be absorbed and distributed to each surface through the thermal conduction blocks 210. The flow of heat generated due to the thermal runaway is indicated by arrows in FIG. 5, visually representing the thermal conductivity characteristics of each surface.

The thermal conduction blocks 210 may be formed of copper blocks, which are independently arranged to correspond to respective surfaces of the secondary battery. Heat generated on a specific surface due to thermal runaway may be transferred to other surfaces. Each block may individually store the amount of heat transferred from the corresponding surface. The thermal conduction blocks 210 may be made of copper having relatively high thermal conductivity, and may be designed to independently analyze the thermal characteristics of each surface. Due to the foregoing configuration, differences in thermal conductivity characteristics among the surfaces of the secondary battery can be quantitatively measured.

The insulation unit 230 may have a structure that encloses the thermal conduction blocks 210, and may control heat to flow only within an internal region enclosed by the insulation unit 230 without heat loss to the outside. The insulation unit 230 may be arranged to enclose all surfaces of the blocks, and may prevent thermal interference between the secondary battery and the external environment. In addition, the insulation unit 230 may be designed to maintain structural stability even at high temperatures and prevent safety issues caused by thermal runaway. The structure of the insulation unit 230 may guide heat in a specific direction, thereby effectively controlling the heat flow within the blocks.

Although not illustrated in FIG. 5, the thermal measurement unit 240 may be disposed outside the thermal conduction blocks 210 to measure temperature. The thermocouple used as the thermal measurement unit 240 may be placed in a non-contact position without making contact with the block, and may precisely measure the internal temperature of each block without external interference. Temperature changes caused by thermal runaway of the secondary battery may be collected through the thermal measurement unit 240 and transmitted to the controller 250. The controller 250 may calculate the thermal conductivity of each surface using the formula Q = cmΔT based on the collected data.

As embodiments, a specific secondary battery may be placed in the thermal conductivity measurement apparatus, and thermal runaway may be induced. Heat may be applied through the heater attached to a long side of the secondary battery. As thermal runaway is induced, the generated heat may be transferred to each surface of the secondary battery. During the foregoing process, temperature change data is collected through the thermal measurement unit 240 disposed on each surface of the secondary battery. The controller 250 may analyze the data to quantitatively calculate the thermal conductivity of each surface of the secondary battery. For example, if the thermal conductivity of a specific surface is lower than that of other surfaces, additional insulation may be applied to the corresponding surface, or the cooling system may be supplemented. The aforementioned analysis enables optimization of the design of the secondary battery and the thermal management system.

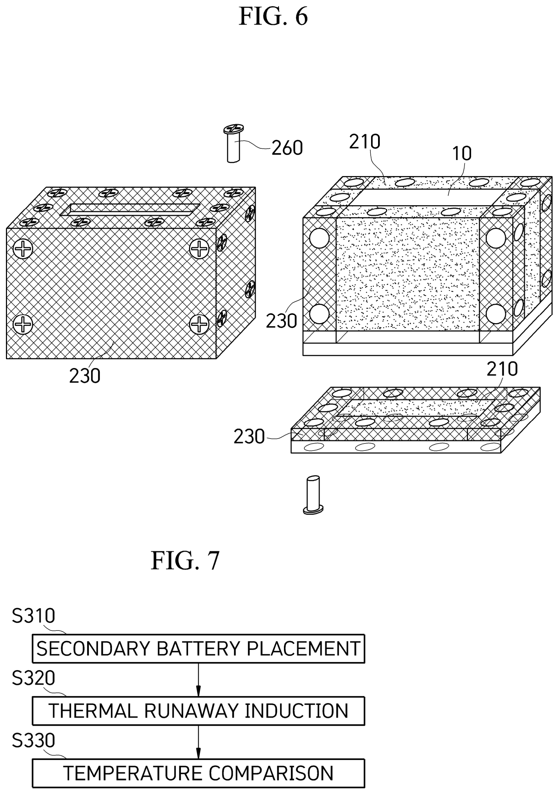

FIG. 6 is a diagram illustrating a screw fastening method and an assembly structure for securing the insulation unit 230 and the thermal conduction blocks 210.

FIG. 6 is a diagram specifically illustrating an assembly process and a fastening method of the thermal conductivity measurement apparatus, and illustrates the structures and functions of the thermal conduction blocks 210, the insulation unit 230, and a screw fastener 260 provided to secure the thermal conduction blocks 210 and the insulation unit 230 according to the present invention. The drawing shows features of the thermal conductivity measurement apparatus designed to enable stable assembly and to prevent external environmental influence during a temperature measurement process.

The thermal conduction blocks 210 may be disposed to correspond to each surface of the secondary battery 10 and may have a hexahedral structure made of copper. The thermal conduction blocks 210 may be secured in close contact with the secondary battery 10 to precisely measure thermal conductivity. In FIG. 6, the thermal conduction blocks 210 may be assembled to be completely enclosed by the insulation unit 230, and a screw fastener 260 may be used to maintain a stable coupling with the insulation unit 230. The insulation unit 230 may have a structure that encloses the peripheries of the thermal conduction blocks 210, thereby preventing thermal interference between the thermal conduction blocks 210 and the external environment, and minimizing heat loss. The insulation unit 230 may be made of a relatively high heat-resistant material that does not deform even at high temperatures, and the screw fastener 260 may be used during the assembly process to reinforce the coupling structure with the thermal conduction blocks 210.

The screw fastener 260 may be used to secure the insulation unit 230 and the thermal conduction blocks 210 to ensure a stable structure. As shown in FIG. 5, holes may be pre-formed in the insulation unit 230 and the thermal conduction blocks 210, and screws are inserted through the holes. The screws may not only serve to fasten components, but may also apply a force that maintains close contact between the thermal conduction blocks 210 and the insulation unit 230, thereby preventing displacement of the block during thermal conductivity measurement. The holes may be formed in the top, bottom, and side surfaces of the insulation unit 230 and designed to enable reliable fastening from all directions. In addition, the screw fastener 260 may be designed to allow easy disassembly and reassembly, so that the screw fastener 260 can be applied to secondary batteries of various sizes and shapes.

The aforementioned fastening method may improve the durability of the thermal conductivity measurement apparatus and prevent structural instability that may occur during the temperature measurement process. In particular, the close contact structure between the thermal conduction blocks 210 and the insulation unit 230 may be maintained while the secondary battery undergoes thermal runaway at high temperatures, thereby ensuring the accuracy of thermal data. The insulation unit 230 may not only control the flow of heat between the thermal conduction blocks 210 and the secondary battery 10 but may also serve to prevent external damage caused by thermal runaway. The arrangement of the screws and the holes used during the fastening process may be designed to prevent the thermal conduction blocks 210 and the insulation unit 230 from being undesirably easily separated, and additional reinforcement may be inserted into the holes as needed.

**As** embodiments, the thermal conduction blocks 210 and the insulation unit 230 may be assembled to enclose the secondary battery 10 and then fastened to each other using the screws. Subsequently, the heat source 220 may be attached to induce thermal runaway, and a thermal evaluation test may be performed. During the test process, the thermal conduction blocks 210 and the insulation unit 230 can be prevented from moving, and thermal interference can be prevented from occurring, thereby ensuring high reliability of the collected thermal data. Furthermore, the fastening method using the screws may be designed to allow the plurality of thermal conduction blocks 210 and the insulation unit 230 to be assembled within a single apparatus, making it expandable into a system capable of simultaneously evaluating multiple secondary batteries.

FIG. 7 is a flowchart illustrating a method for measuring thermal conductivity of a secondary battery using a detachable jig.

FIG. 7 is a flowchart sequentially illustrating the steps of the thermal conductivity measurement method according to the present invention, and represents significant processes performed to analyze thermal runaways characteristics of the secondary battery. The drawing sequentially describes the entire process including the placement of the secondary battery, induction of thermal runaway, temperature comparison, and calculation of thermal conductivity. The components used in each step and operating methods thereof will be specifically described with reference to the drawing.

First, a battery placement step S310 may refer to a process of placing the secondary battery 10 in the thermal conduction blocks 210 of the thermal conductivity measurement apparatus. The secondary battery 10 may be placed in close contact with each surface of the thermal conduction blocks 210, which are manufactured in a size and shape corresponding to the surface area of the secondary battery 10 to enable accurate measurement. The insulation unit 230 may have a structure that encloses the thermal conduction blocks 210 to prevent external thermal interference and minimize heat loss during thermal conductivity measurement. In this step, the thermal conduction blocks 210 and the insulation unit 230 may be fixed using the screw fastener 260 so that the secondary battery 10 can be stably mounted.

**Next,** a thermal runaway induction step S320 may refer to a process of inducing a thermal runaway state by applying heat to a specific surface of the secondary battery 10 using the heat source 220. The heat source 220 may include the heater, and may be attached to a long side (i.e., major surface) of the secondary battery 10 to generate heat to a temperature set by the controller 250. During the aforementioned process, the secondary battery 10 may experience a rapid increase in temperature due to internal chemical reactions, thereby entering a thermal runaway state. The heat generated by thermal runaway may be transferred to other surfaces of the secondary battery 10 and be absorbed by the thermal conduction blocks 210. This step may be an important part of the process for analyzing thermal characteristics of the secondary battery 10 by simulating thermal runaway that may occur in actual use environments.

**A** temperature comparison step S330 may refer to a process of collecting thermal data generated by thermal runaway and comparing the data to calculate thermal conductivity. The thermocouple used as the thermal measurement unit 240 may be disposed outside the thermal conduction blocks 210 and measure the temperature of the thermal conduction blocks 210 in a non-contact manner. Data about temperature changes before and after the thermal runaway may be collected through the thermal measurement unit 240 and transmitted to the controller 250. The controller 250 may calculate thermal conductivity using the formula Q = cmΔT. In this step, thermal conductivity of each surface of the secondary battery 10 may be independently calculated, enabling precise analysis of the thermal characteristics of the secondary battery 10 for each surface.

**As** embodiments, a case may be considered in which the secondary battery 10 is enclosed by the thermal conduction blocks 210 and the insulation unit 230, thermal runaway is induced through the heat source 220, and temperature data is collected through the thermal measurement unit 240 to calculate thermal conductivity. In the case of a specific secondary battery, the rate and quantity of heat transferred from the long side to short sides may be asymmetrical. In this case, an additional cooling device may be installed on the corresponding surface, or the insulation design may be improved to enhance the thermal management performance. Accordingly, the design and safety of the secondary battery 10 may be improved.

Hereinafter, materials which may be used in a secondary battery according to an embodiment of the present invention are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05) ; LiₐMn_{2-b}X_{b}O_{4-c}D_{c} (0.90≤a≤1.8, 0≤b≤0.5, 0≤c≤0.05) ; LiₐNi_{1-b-c}Co_{b}X_{c}O_{2-α}D_{α} (0.90≤a≤1.8, 0≤b≤0.5, 0≤c≤0.5, 0<α<2) ; LiₐNi_{1-b-c}Mn_{b}X_{c}O_{2-α}D_{α} (0.90≤a≤1. 8, 0≤b≤0.5, 0≤c≤0.5, 0<α<2) ; LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8,0.001≤b≤0.1) ; LiₐMn_{1-b}G_{b}O₂ (0.90≤a≤1.8, 0.001≤b≤0.1); LiₐMn₂G_{b}O₄ (0.90≤a≤1.8,0.001≤b≤0.1) ; LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

**A** positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

**Al** may be used as the current collector, but the present invention may not be limited thereto.

**A** negative electrode active material may include a material capable of reversibly Intercalation/deintercalation with respect to lithium ions, lithium metal, an alloy of lithium metal, a material capable of doping and dedoping with respect to lithium, or transition metal oxide.

The material capable of reversibly Intercalation/deintercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

**An** Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

**A** negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

**A** nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

**One** selected among nickel foil, stainless steel foil, titanium foil, nickel foam, copper foam, a polymer base on which a conductive metal has been coated, and a combination of them may be used as a current collector for the negative electrode.

**An** electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

**A** separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present invention is not limited thereto.

The organic matter and the inorganic matter may have a form in which the organic matter and the inorganic matter have been mixed in one coating layer or a form in which a coating layer including the organic matter and a coating layer including the inorganic matter have been stacked.

Although the present invention has been described above in connection with the limited embodiments and drawings, the present invention is not limited to the embodiments. A person having ordinary knowledge in the art to which the present invention pertains may modify and change the present invention within the technical spirit of the present invention and the equivalent range of the following claims.

## Claims

1. An apparatus (200) for measuring thermal conductivity of a secondary battery (10) using a detachable jig, the apparatus (200) comprising:
a plurality of independent thermal conduction blocks (210) arranged to correspond to respective surfaces of the secondary battery (10);
a heat source (220) attached to at least one of the thermal conduction blocks (210); and
an insulation unit (230) configured to enclose peripheries of the thermal conduction blocks (210),
wherein the thermal conduction blocks (210) are configured to independently measure thermal conductivities of the respective surfaces of the secondary battery (10).

2. The apparatus (200) as claimed in claim 1, wherein the heat source (220) comprises a heater attached to a specific surface of the thermal conduction blocks (210) to induce thermal runaway of the secondary battery (10).

3. The apparatus (200) as claimed in claim 1 or 2, further comprising a thermal measurement unit (240) located outside the thermal conduction blocks (210) and configured to collect thermal data,
wherein the thermal measurement unit (240) comprises a thermocouple, and
wherein the thermocouple is disposed at a position that is not in contact with the thermal conduction blocks (210).

4. The apparatus (200) as claimed in any of the preceding claims, wherein the insulation unit (230) includes a thermal conduction blocking structure inside the thermal conduction blocks (210), and is configured to guide heat to be transferred in only a specific direction.

5. The apparatus (200) as claimed in any of the preceding claims, further comprising a controller (250) configured to calculate thermal conductivity of each of the thermal conduction blocks (210) using a difference between a maximum temperature and an initial temperature of the corresponding thermal conduction block (210).

6. The apparatus (200) as claimed in any of the preceding claims, wherein each of the thermal conduction blocks (210) is designed in a hexahedral shape, and is fabricated such that a contact surface of each of the thermal conduction blocks (210) corresponds to a surface area of a corresponding surface of the secondary battery (10).

7. The apparatus (200) as claimed in any of the preceding claims, being configured to simultaneously measure thermal conductivities of respective surfaces of a plurality of secondary batteries (10).

8. A method of measuring thermal conductivity of a secondary battery (10) using a detachable jig to measure thermal conductivities of respective surfaces of the secondary battery (10), the method comprising:
placing the secondary battery (10) in a thermal conductivity measurement apparatus (200);
inducing thermal runaway by attaching a heat source (220) to a specific surface of the secondary battery (10); and
comparing temperatures before and after the thermal runaway by using a thermal measurement unit (240) on another surface of the secondary battery (10).

9. The method as claimed in claim 8, wherein the inducing of the thermal runaway comprises inducing the thermal runaway through the heat source (220) including a heater attached to a long side of the secondary battery (10).

10. The method as claimed in claim 8 or 9, wherein the comparing of the temperatures before and after the thermal runaway comprises comparing the temperatures through the thermal measurement unit (240) including a thermocouple disposed at a position that is not in contact with thermal conduction blocks (210) outside the secondary battery (10).

11. The method as claimed in any of the claims 8 to 10, wherein the comparing of the temperatures before and after the thermal runaway comprises calculating the thermal conductivity of each of the surfaces of the secondary battery (10) using a formula Q = cmΔT with a difference of the measured temperatures.

12. The method as claimed in any of the claims 8 to 11, further comprising enclosing thermal conduction blocks (210) with an insulator so that flame and particles discharged from a vent of the secondary battery (10) are prevented from affecting temperature measurement.

13. The method as claimed in any of the claims 8 to 12, further comprising independently performing thermal conductivity measurement for each of a plurality of secondary batteries (10).

14. The method as claimed in any of the claims 8 to 13, further comprising securing the secondary battery (10) by using a screw fastener (260) included in thermal conduction blocks (210).

15. A system for measuring thermal conductivity of a secondary battery (10) using a detachable jig to evaluate the thermal conductivity of the secondary battery (10) under a thermal runaway condition, the system comprising:
a plurality of independent thermal conduction blocks (210) arranged to correspond to respective surfaces of the secondary battery (10);
a heat source (220) provided on at least one of the thermal conduction blocks (210) and configured to induce thermal runaway;
a thermal measurement unit (240) located outside the thermal conduction blocks (210) and configured to collect thermal data; and
a controller (250) configured to calculate thermal conductivity of each of the surfaces of the secondary battery (10) based on the thermal data,
the system being configured to quantitatively evaluate the independent thermal conductivity for each of the surfaces of the secondary battery (10).
